# EUROPEAN PATENT APPLICATION

(11) **EP 4 686 061 A1**
(43) Date of publication of application: **28.01.2026**
(21) Application number: 25306181.6
(22) Date of filing: 21.07.2025
(51) Int. Cl.: H02M 1/10, H02M 1/42, H02M 3/158

(54) **METHOD FOR CONTROLLING TOTEM-POLE CIRCUIT AND POWER CONVERTER**

(30) Priority: 25.07.2024 CN 202411009184
(71) Applicant: SCHNEIDER ELECTRIC INDUSTRIES SAS, 92500 Rueil-Malmaison (FR)
(72) Inventor: FAN, Zhongxiao, Shenzhen, 518000 (CN)
(74) Representative: Manitz Finsterwald Patent- und Rechtsanwaltspartnerschaft mbB

(57) **Abstract**

A totem-pole circuit includes switching devices Q1, Q2, Q3, Q4 and an inductor. A fifth node between Q1 and Q2 is coupled to a third node. A sixth node between Q3 and Q4 is coupled to a fourth node, at least one of the fifth and sixth nodes being coupled to a respective node of the third and fourth nodes via the inductor. An input voltage between the third and fourth nodes is obtained in a forward input configuration of the totem-pole circuit. Based on the input voltage, whether the third and fourth nodes are connected to AC or DC power supply is determined. The totem-pole circuit operates in a PFC mode upon being connected to the AC power supply. A working mode of the totem-pole circuit is selected from a plurality of DC input modes upon being connected to the DC power supply.

## Description

### FIELD

Example embodiments of the present disclosure generally relate to the field of electrical equipment, and in particular to a method for controlling a totem-pole circuit, a power converter, an electronic device, and a computer-readable storage media.

### BACKGROUND

With the continuous development of energy structures, new power systems are gradually constructed based on new energy and energy storage systems. Such systems typically include renewable energy sources such as solar energy, wind energy, and energy storage technologies, such as battery energy storage systems, associated therewith. Direct-current (DC) power distribution technology has gradually emerged in the power distribution industry due to its application advantages in new energy integration and energy storage systems. The DC system can be directly connected to a DC power supply such as a solar cell panel and a battery energy storage system, so that the loss of energy in alternating-current (AC)/DC conversion process is reduced, and the overall energy utilization efficiency is improved.

In a power system, a power converter plays a vital role that is responsible for converting electrical energy from one form to another to meet the needs of different devices and loads. Despite the advantages of DC power distribution technology, AC power distribution systems will predominate in the foreseeable future due to their mature infrastructure and extensive application basis. Thus, the AC/DC hybrid system will be widely present over a relatively long period of time. This hybrid system requires the power converter not only to efficiently switch between DC and AC, but also to ensure the stability and reliability of the system. However, conventional power converters are difficult to meet such requirements, which brings complexity to the design and selection of converter products.

### SUMMARY

Embodiments of the present disclosure provide a method for controlling a totem-pole circuit, a power converter, an electronic device, and a computer-readable storage medium to at least partially solve the above problems.

In a first aspect of the present disclosure, a method for controlling a totem-pole circuit is provided. The totem-pole circuit includes a first switching device, a second switching device, a third switching device, a fourth switching device, and an inductor. A switching frequency of the first switching device and the second switching device is higher than a switching frequency of the third switching device and the fourth switching device. The first switching device and the second switching device are connected in series between a first node and a second node. A fifth node between the first switching device and the second switching device is electrically coupled to a third node. The third switching device and the fourth switching device are connected in series between the first node and the second node. A sixth node between the third switching device and the fourth switching device is electrically coupled to a fourth node, wherein at least one of the fifth node and the sixth node is electrically coupled to a respective node of the third node and the fourth node via the inductor. The method includes: in response to the totem-pole circuit being in a forward input configuration, obtaining an input voltage between the third node and the fourth node; determining, based on the input voltage, whether the third node and the fourth node are connected to an AC power supply or a DC power supply; in response to the third node and the fourth node being connected to the AC power supply, causing the totem-pole circuit to operate in a power factor correction mode; and in response to the third node and the fourth node being connected to the DC power supply, selecting a working mode of the totem-pole circuit from a plurality of DC input modes.

In a second aspect of the present disclosure, an apparatus for controlling a totem-pole circuit is provided, the totem-pole circuit includes a first switching device, a second switching device, a third switching device, a fourth switching device, and an inductor, a switching frequency of the first switching device and the second switching device being higher than a switching frequency of the third switching device and the fourth switching device, the first switching device and the second switching device being connected in series between a first node and a second node, a fifth node between the first switching device and the second switching device being electrically coupled to a third node, the third switching device and the fourth switching device being connected in series between the first node and the second node, a sixth node between the third switching device and the fourth switching device being electrically coupled to a fourth node, wherein at least one of the fifth node and the sixth node is electrically coupled to a respective node of the third node and the fourth node via the inductor. The apparatus comprises: an obtaining unit configured to, in response to the totem-pole circuit being in a forward input configuration, obtain an input voltage between the third node and the fourth node; a determining unit configured to determine, based on the input voltage, whether the third node and the fourth node are connected to an AC power supply or a DC power supply; a first control unit configured to, in response to the third node and the fourth node being connected to the AC power supply, cause the totem-pole circuit to operate in a power factor correction mode; and a second control unit configured to, in response to the third node and the fourth node being connected to the DC power supply, select a working mode of the totem-pole circuit from a plurality of DC input modes.

In a third aspect of the present disclosure, there is provided a power converter including a totem-pole circuit and a processing unit. The totem-pole circuit includes a first switching device, a second switching device, a third switching device, a fourth switching device, and an inductor. A switching frequency of the first switching device and the second switching device is higher than a switching frequency of the third switching device and the fourth switching device. The first switching device and the second switching device are connected in series between a first node and a second node. A fifth node between the first switching device and the second switching device is electrically coupled to a third node. The third switching device and the fourth switching device are connected in series between the first node and the second node. A sixth node between the third switching device and the fourth switching device is electrically coupled to a fourth node, wherein at least one of the fifth node and the sixth node is electrically coupled to a respective node of the third node and the fourth node via the inductor. The processing unit is configured to: in response to the totem-pole circuit being in a forward input configuration, obtain an input voltage between the third node and the fourth node; determine, based on the input voltage, whether the third node and the fourth node are connected to an AC power supply or a DC power supply; in response to the third node and the fourth node being connected to the AC power supply, cause the totem-pole circuit to operate in a power factor correction mode; and in response to the third node and the fourth node being connected to the DC power supply, select a working mode of the totem-pole circuit from a plurality of DC input modes.

In a fourth aspect of the present disclosure, an electronic device is provided. The electronic device includes at least one processing unit; and at least one memory coupled to the at least one processing unit and storing instructions for execution by the at least one processing unit. The instructions, when executed by the at least one processing unit, cause the apparatus to perform the method of the first aspect.

In a fifth aspect of the present disclosure, a computer-readable storage medium is provided. The computer-readable storage medium has a computer program stored thereon, and the computer program is executable by the processor to implement the method of the first aspect.

According to the embodiment of the present disclosure, the specific working mode of the totem-pole circuit may be adjusted based on the input/output configuration and the node connection state of the totem-pole circuit, so that the power converter can be reliably compatible with the AC/DC power supply or load. In this way, the power converter can not only perform efficient switching between the DC and the AC, but also ensure the stability and reliability of the system.

It should be understood that the content described in the SUMMARY is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1A illustrates a schematic diagram of an example environment in which embodiments of the present disclosure can be implemented;
FIG. 1B illustrates a flowchart of a process for controlling a totem-pole circuit according to some embodiments of the present disclosure;
FIG. 2 shows a flowchart of a process for controlling a totem-pole circuit according to some embodiments of the present disclosure;
FIG. 3 illustrates a current path of the totem-pole circuit shown in FIG. 1A in a positive polarity pass-through input mode;
FIG. 4 shows a current path of the totem-pole circuit shown in FIG. 1A in the negative polarity pass-through input mode;
FIG. 5 shows a current path of the totem-pole circuit shown in FIG. 1A in a positive polarity boost input mode;
FIG. 6 shows a current path of the totem-pole circuit shown in FIG. 1A in the negative polarity boost input mode;
FIG. 7 shows a flowchart of a process for controlling a totem-pole circuit according to some other embodiments of the present disclosure;
FIG. 8 shows a flowchart of a process for controlling a totem-pole circuit according to some other embodiments of the present disclosure;
FIG. 9 shows a current path of the totem-pole circuit shown in FIG. 1A in a positive polarity pass-through output mode;
FIG. 10 shows a current path of the totem-pole circuit shown in FIG. 1A in a negative polarity pass-through output mode;
FIG. 11 illustrates a current path of the totem-pole circuit shown in FIG. 1A in a positive polarity buck output mode;
FIG. 12 shows a current path of the totem-pole circuit shown in FIG. 1A in the negative polarity buck output mode;
FIG. 13 illustrates a schematic diagram of another example environment in which embodiments of the present disclosure can be implemented;
FIG. 14 illustrates a schematic diagram of another example environment in which embodiments of the present disclosure can be implemented;
FIG. 15 illustrates a schematic block diagram of an apparatus for controlling a totem-pole circuit according to some embodiments of the present disclosure; and
FIG. 16 illustrates a block diagram of a device adapted to implement various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for example purposes only and are not intended to limit the scope of the present disclosure.

In the description of the embodiments of the present disclosure, the terms "including" and the like should be understood to include "including but not limited to". The term "based on" should be understood as "based at least in part on". The terms "an embodiment" or "the embodiment" should be understood as "at least one embodiment". The term "some embodiments" should be understood as "at least some embodiments". Other explicit and implicit definitions may also be included below.

As briefly mentioned above, the AC/DC hybrid system will be widely present over a relatively long period of time, which requires the power converter not only to efficiently switch between DC and AC, but also to ensure the stability and reliability of the system; however, conventional power converters are difficult to meet such requirements, which brings complexity to the design and selection of converter products.

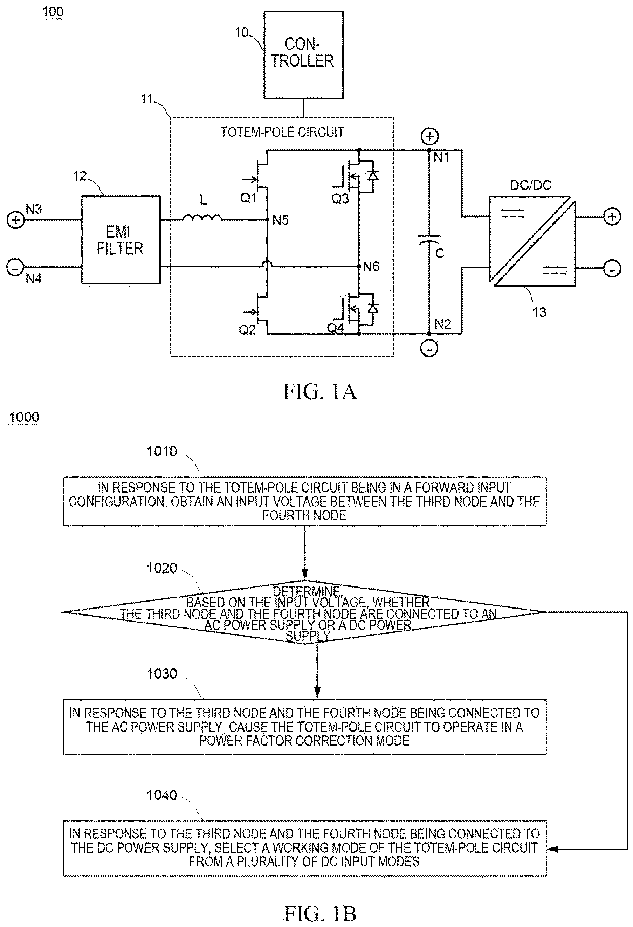

Embodiments of the present disclosure provide a control solution of a totem-pole circuit. In the solution, in response to the totem-pole circuit being in a forward input configuration and an input end being connected to an AC power supply, the totem-pole circuit operates in a power factor correction mode, and in response to the totem-pole circuit being in the forward input configuration and the input end being connected to a DC power supply, the totem-pole circuit operates in one of a positive polarity pass-through input mode, a negative polarity pass-through input mode, a positive polarity boost input mode, and a negative polarity boost input mode, so that the power converter in the embodiments of the present disclosure can be reliably compatible with the AC power input. Hereafter, example embodiments of the present disclosure will be described in detail with reference to FIG. 1A to FIG. 13.

FIG. 1A illustrates a schematic diagram of an example environment in which embodiments of the present disclosure can be implemented. As shown in FIG. 1A, the example environment includes a power converter 100 for converting electrical energy from one form to another to meet the needs of different devices and loads. The power converter 100 includes a totem-pole circuit 11 including a first switching device Q1, a second switching device Q2, a third switching device Q3, a fourth switching device Q4, and an inductor L. The switching frequency of the first switching device Q1 and the second switching device Q2 is higher than the switching frequency of the third switching device Q3 and the fourth switching device Q4. In some embodiments, the first switching device Q1 and the second switching device Q2 may be gallium nitride (GaN) devices or silicon carbide (SiC) devices, while the third switching device Q3 and the fourth switching device Q4 may be silicon (Si) devices. The first switching device Q1 and the second switching device Q2 are connected in series between the first node N1 and the second node N2. A fifth node N5 between the first switching device Q1 and the second switching device Q2 is electrically coupled to the third node N3 via the inductor L. The third switching device Q3 and the fourth switching device Q4 are connected in series between the first node N1 and the second node N2. The sixth node N6 between the third switching device Q3 and the fourth switching device Q4 is electrically coupled to the fourth node N4.

As shown in FIG. 1A, the power converter 100 may further include a controller 10, and the controller 10 may apply a control signal to control ends of the first switching device Q1, the second switching device Q2, the third switching device Q3, and the fourth switching device Q4 to control the on-off states of the first switching device Q1, the second switching device Q2, the third switching device Q3, and the fourth switching device Q4. The controller 10 may be a controller included in an electronic device in which the power converter 100 is located, or may be a controller separately provided independently of a controller included in the electronic device.

In some embodiments, as shown in FIG. 1A, the power converter 100 further includes a DC link capacitor C connected between the first node N1 and the second node N2 and configured to store electrical energy during a power conversion process.

In some embodiments, as shown in FIG. 1A, the power converter 100 further includes an electromagnetic interference (EMI) filter 12 disposed between the third and fourth nodes N3, N4 and the totem-pole circuit 11 for suppressing the propagation of a electromagnetic interference signal and improving the anti-interference capability of the power converter 100. The EMI filter 12 may adopt various known or future available structures, which is not limited to the embodiments of the present disclosure.

In some embodiments, the power converter 100 is adapted to operate in two different modes, i.e., a forward input configuration and a reverse output configuration. In the forward input configuration, the third node N3 and the fourth node N4 may be used as the input end of the power converter 100, and the first node N1 and the second node N2 may be used as the output end of the power converter 100. In the forward input configuration, the third node N3 and the fourth node N4 may be connected to an AC power supply or a DC power supply, and the first node N1 and the second node N2 may provide the converted electrical energy to an energy storage system such as a battery or a DC load. In the reverse output configuration, the first node N1 and the second node N2 may be used as the input end of the power converter 100, and the third node N3 and the fourth node N4 may be used as the output end of the power converter 100. In the reverse output configuration, the first node N1 and the second node N2 may deliver electrical energy stored by an energy storage system such as a battery to the totem-pole circuit 11 for power conversion, and the third node N3 and the fourth node N4 may provide the converted electrical energy to an AC/DC grid or an AC/DC load.

In some embodiments, as shown in FIG. 1A, the power converter 100 further includes a DC to DC (DC/DC) conversion unit 13 connected to the first node N1 and the second node N2 to perform voltage conversion on the DC voltage, thereby adapting to different voltage level requirements.

To enable the totem-pole circuit 11 to be compatible with an AC/DC power supply, embodiments of the present disclosure provide specific control logic for the first switching device Q1, the second switching device Q2, the third switching device Q3, and the fourth switching device Q4. This will be described in detail with reference to the accompanying drawings.

FIG. 1B illustrates a flowchart of a process 1000 for controlling a totem-pole circuit according to some embodiments of the present disclosure. The process 1000 illustrates an example control logic of the power converter 100 in the forward input configuration. In this case, with reference to FIG. 1A, the third node N3 and the fourth node N4 are used as the input end of the power converter 100, and the first node N1 and the second node N2 or the output of the DC/DC conversion unit 13 are used as the output end of the power converter 100. The process 1000 may be performed by the controller 10 of the power converter 100.

At block 1010, in response to the totem-pole circuit 11 being in a forward input configuration, an input voltage between the third node N3 and the fourth node N4 is obtained. The input voltage between the third node N3 and the fourth node N4 may be collected by a sampling circuit such as a voltage divider resistor, and details are not described herein again. The controller 10 may obtain the input voltage collected by the voltage divider circuit.

At block 1020, based on the input voltage between the third node N3 and the fourth node N4, whether the third node N3 and the fourth node N4 are connected to the AC power supply or the DC power supply is determined. The controller 10 may determine whether the third node N3 and the fourth node N4 are connected to the AC power supply or the DC power supply based on the magnitude and polarity of the input voltage.

At block 1030, in response to the third node N3 and the fourth node N4 being connected to the AC power supply, the totem-pole circuit 11 is caused to operate in a power factor correction mode (PFC mode). In the PFC mode, the third switching device Q3 and the fourth switching device Q4 may be alternately switched on and off based on the frequency of the AC power supply, and the first switching device Q1 and the second switching device Q2 are alternately switched on and off at a higher switching frequency than the frequency of the AC power supply, thereby converting the AC energy into DC energy, and outputting the DC energy at the first node N1 and the second node N2. The PFC mode of the totem-pole circuit 11 is its conventional working mode, which will not be described in detail here.

At block 1040, in response to the third node N3 and the fourth node N4 being connected to the DC power supply, a working mode of the totem-pole circuit 11 is selected from a plurality of DC input modes. By selecting the working mode of the totem-pole circuit 11 from the plurality of DC input modes, the totem-pole circuit 11 can be enabled to be compatible with the DC power input. Examples of various DC input modes will be described next with reference to the accompanying drawings.

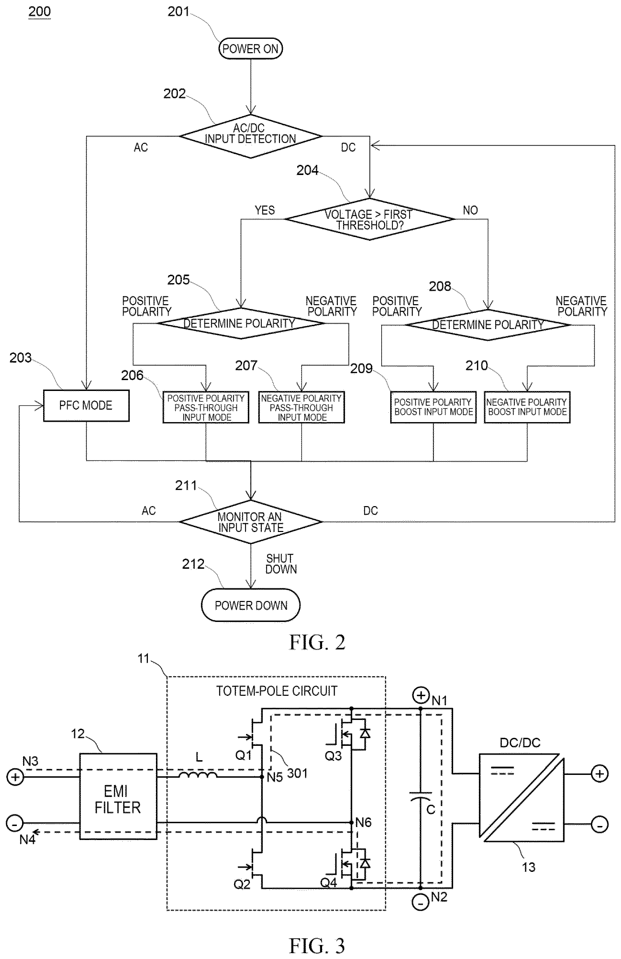

FIG. 2 illustrates a flowchart of a process 200 for controlling a totem-pole circuit 11 according to some embodiments of the present disclosure. The process 200 illustrates an example control logic of the power converter 100 in the forward input configuration. In this case, with reference to FIG. 1A, the third node N3 and the fourth node N4 are used as the input end of the power converter 100, and the first node N1 and the second node N2 or the output of the DC/DC conversion unit 13 are used as the output end of the power converter 100. The process 200 may be performed by the controller 10 of the power converter 100.

At block 201, the power converter 100 is powered on. After power-on, the controller 10 may obtain the input voltage between the third node N3 and the fourth node N4.

At block 202, AC/DC input detection is performed for the power converter 100 to determine, based on the input voltage between the third node N3 and the fourth node N, whether the third node N3 and the fourth node N4 are connected to the AC power supply or the DC power supply. In response to the third node N3 and the fourth node N4 being connected to the AC power supply, the process 200 proceeds to block 203, and in response to the third node N3 and the fourth node N4 being connected to the DC power supply, the process 200 proceeds to blocks 204 to 210.

At block 203, in response to the totem-pole circuit 11 being in the forward input configuration and the third node N3 and the fourth node N4 being connected to the AC power supply, the totem-pole circuit 11 is caused to operate in the PFC mode. As described above, the PFC mode of the totem-pole circuit 11 is its conventional working mode, which will not be repeated here.

At block 204 to block 210, in response to the totem-pole circuit 11 being in the forward input configuration and the third node N3 and the fourth node N4 connected to the DC power supply, the totem-pole circuit 11 is caused to operate in one of a plurality of DC input modes. In some embodiments, as shown in FIG. 2, the plurality of DC input modes includes a positive polarity pass-through input mode, a negative polarity pass-through input mode, a positive polarity boost input mode, and a negative polarity boost input mode. In some other embodiments, the plurality of DC input modes may include at least two of the positive polarity pass-through input mode, the negative polarity pass-through input mode, the positive polarity boost input mode, and the negative polarity boost input mode.

The specific operations of blocks 204 to 210 will be described in detail below.

At block 204, it may be determined whether the input voltage between the third node N3 and the fourth node N4 is greater than a first threshold. The first threshold may be predetermined based on design requirements, which is not limited to the embodiments of the present disclosure. In response to the input voltage between the third node N3 and the fourth node N4 being greater than the first threshold, the process 200 proceeds to block 205. In response to the input voltage between the third node N3 and the fourth node N4 being less than the first threshold, the process 200 proceeds to block 208. In an embodiment of the present disclosure, in response to the input voltage between the third node N3 and the fourth node N4 being equal to the first threshold, the process 200 may proceed to block 205 or block 208 based on design requirement, which is not limited to the embodiments of the present disclosure.

At block 205, it may be determined whether the third node N3 and the fourth node N4 of the totem-pole circuit 11 are in a positive or negative polarity connection state. In the positive polarity connection state, the third node N3 is connected to a positive electrode of the DC power supply, and the fourth node N4 is connected to a negative electrode of the DC power supply. In the negative polarity connection state, the third node N3 is connected to the negative electrode of the DC power supply, and the fourth node N4 is connected to the positive electrode of the DC power supply. In response to the third node N3 and the fourth node N4 being in the positive polarity connection state, the process 200 proceeds to block 206. In response to the third node N3 and the fourth node N4 being in the negative polarity connection state, the process 200 proceeds to block 207.

At block 206, in response to the third node N3 and the fourth node N4 being in the positive polarity connection state, the totem-pole circuit 11 is caused to operate in the positive polarity pass-through input mode. The specific operation state of the totem-pole circuit 11 in the positive polarity pass-through input mode will be described in detail below with reference to FIG. 3.

FIG. 3 shows a current path of the totem-pole circuit 11 shown in FIG. 1A in the positive polarity pass-through input mode. As shown in FIG. 3, in the positive polarity pass-through input mode, since the third node N3 is connected to the positive electrode of the DC power supply, the fourth node N4 is connected to the negative electrode of the DC power supply, and the input voltage between the third node N3 and the fourth node N4 is greater than the first threshold, the first switching device Q1 and the fourth switching device Q4 may be controlled to remain on, and the second switching device Q2 and the third switching device Q3 remain off. In this case, the current may flow from the third node N3 to the fourth node N4 via the inductor L, the first switching device Q1, the DC link capacitor C, and the fourth switching device Q4. In a case that the power converter 100 includes the EMI filter 12, the current will also flow through the EMI filter 12. By charging the DC link capacitor C, a desired DC output voltage can be provided between the first node N1 and the second node N2. Alternatively, the DC output voltage may further be subjected to further DC voltage conversion via the DC/DC conversion unit 13.

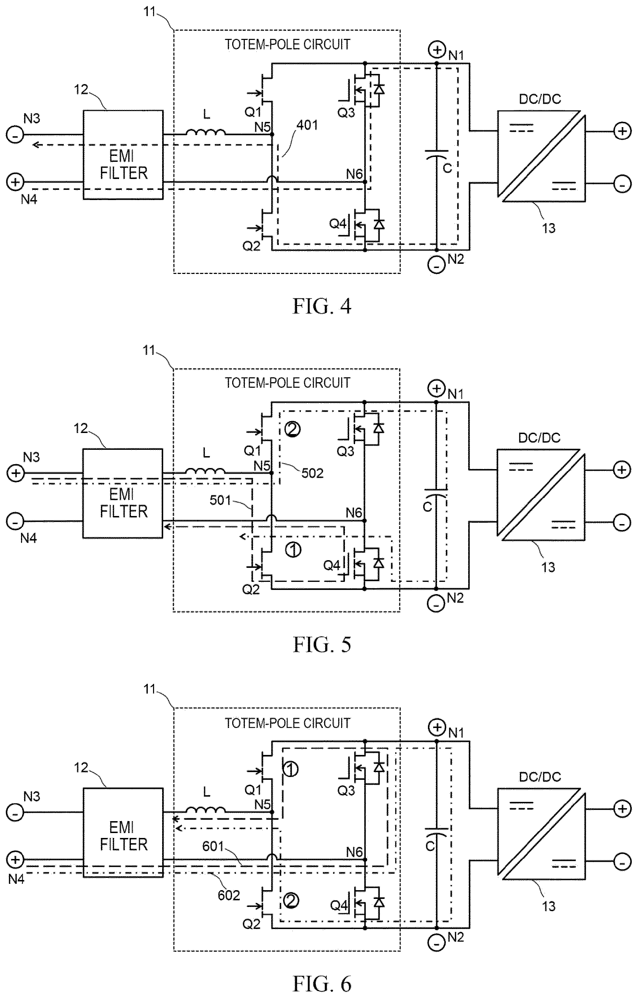

At block 207, in response to the third node N3 and the fourth node N4 being in the negative polarity connection state, the totem-pole circuit 11 is caused to operate in the negative polarity pass-through input mode. The specific operation state of the totem-pole circuit 11 in the negative polarity pass-through input mode will be described in detail below with reference to FIG. 4.

FIG. 4 shows a current path of the totem-pole circuit 11 shown in FIG. 1A in the negative polarity pass-through input mode. As shown in FIG. 4, in the negative polarity pass-through input mode, since the third node N3 is connected to the negative electrode of the DC power supply, the fourth node N4 is connected to the positive electrode of the DC power supply, and the input voltage between the third node N3 and the fourth node N4 is greater than the first threshold, the second switching device Q2 and the third switching device Q3 may be controlled to remain on, and the first switching device Q1 and the fourth switching device Q4 remain off. In this case, the current may flow from the fourth node N4 to the third node N3 via the third switching device Q3, the DC link capacitor C, the second switching device Q2, and the inductor L. In a case that the power converter 100 includes the EMI filter 12, the current will also flow through the EMI filter 12. By charging the DC link capacitor C, a desired DC output voltage can be provided between the first node N1 and the second node N2. Alternatively, the DC output voltage may further be subjected to further DC voltage conversion via the DC/DC conversion unit 13.

At block 208, it may be determined whether the third node N3 and the fourth node N4 of the totem-pole circuit 11 are in a positive or negative polarity connection state. In response to the third node N3 and the fourth node N4 being in the positive polarity connection state, the process 200 proceeds to block 209. In response to the third node N3 and the fourth node N4 being in the negative polarity connection state, the process 200 proceeds to block 210.

At block 209, in response to the third node N3 and the fourth node N4 being in the positive polarity connection state, the totem-pole circuit 11 is caused to operate in the positive polarity boost input mode. The specific operation state of the totem-pole circuit 11 in the positive polarity boost input mode will be described in detail with reference to FIG. 5.

FIG. 5 shows a current path of the totem-pole circuit 11 shown in FIG. 1A in the positive polarity boost input mode. As shown in FIG. 5, since the third node N3 is connected to the positive electrode of the DC power supply, the fourth node N4 is connected to the negative electrode of the DC power supply, and the input voltage between the third node N3 and the fourth node N4 is less than the first threshold, the fourth switching device Q4 may be controlled to remain on, the third switching device Q3 remains off, and the first switching device Q1 and the second switching device Q2 are alternately switched on. The first switching device Q1 and the second switching device Q2 may operate in a pulse width modulation (PWM) mode or any other suitable mode. When the second switching device Q2 is switched on and the first switching device Q1 is switched off (which may also be referred to as a first stage), a current path 501 may be formed in the power converter 110. Along the current path 501, the current may flow from third node N3 to fourth node N4 via the inductor L, the second switching device Q2, and the fourth switching device Q4, thereby causing the inductor L to store energy through excitation. When the first switching device Q1 is switched on and the second switching device Q2 is switched off (which may also be referred to as a second stage), a current path 502 may be formed in the power converter 110. Along the current path 502, the current may flow from the third node N3 to the fourth node N4 via the inductor L, the first switching device Q1, the DC link capacitor C, and the fourth switching device Q4, thereby implementing freewheeling to charge the DC link capacitor C. By alternately switching on and switching off the first switching device Q1 and the second switching device Q2, the input voltage between the third node N3 and the fourth node N4 can be boosted to provide the required boost voltage between the first node N1 and the second node N2. Alternatively, the DC output voltage may further be subjected to further DC voltage conversion via the DC/DC conversion unit 13.

At block 210, in response to the third node N3 and the fourth node N4 being in the negative polarity connection state, the totem-pole circuit 11 is caused to operate in the negative polarity boost input mode. The specific operation state of the totem-pole circuit 11 in the negative polarity boost input mode will be described in detail with reference to FIG. 6.

FIG. 6 shows a current path of the totem-pole circuit 11 shown in FIG. 1A in the negative polarity boost input mode. As shown in FIG. 6, since the third node N3 is connected to the negative electrode of the DC power supply, the fourth node N4 is connected to the positive electrode of the DC power supply, and the input voltage between the third node N3 and the fourth node N4 is less than the first threshold, the third switching device Q3 may be controlled to remain on, the fourth switching device Q4 remains off, and the first switching device Q1 and the second switching device Q2 are alternately switched on. The first switching device Q1 and the second switching device Q2 may operate in a PWM mode or any other suitable mode. When the first switching device Q1 is switched on and the second switching device Q2 is switched off (which may also be referred to as a first stage), a current path 601 may be formed in the power converter 110. Along the current path 601, the current may flow from the fourth node N4 to the third node N3 via the third switching device Q3, the first switching device Q1, and the inductor L, thereby causing the inductor L to store energy through excitation. When the first switching device Q1 is switched off and the second switching device Q2 is switched on (which may also be referred to as a second stage), a current path 602 may be formed in the power converter 110. Along the current path 602, the current may flow from the fourth node N4 to the third node N3 via the third switching device Q3, the DC link capacitor C, the second switching device Q2, and the inductor L, thereby implementing freewheeling to charge the DC link capacitor C. By alternately switching on and switching off the first switching device Q1 and the second switching device Q2, the input voltage between the third node N3 and the fourth node N4 can be boosted to provide the required boost voltage between the first node N1 and the second node N2. Alternatively, the DC output voltage may further be subjected to further DC voltage conversion via the DC/DC conversion unit 13.

With continued reference to FIG. 2, at block 211, an input state of the power converter 100 may be monitored. In response to the power converter 100 being connected to the AC power supply, the process 200 returns to block 203. In response to the power converter 100 being connected to the DC power supply, the process 200 returns to block 204. In response to the power converter 100 being shut down, the power converter 100 is powered down at block 212.

According to an embodiment of the present disclosure, when the power converter 100 is in the forward input configuration, the operating state of the totem-pole circuit 11 may be dynamically adjusted based on the voltage magnitude between the third node N3 and the fourth node N4 and the connection polarity states of the third node N3 and the fourth node N4, so that the input end of the power converter 100 is compatible with different levels of DC voltage. Compared with a totem-pole circuit capable of supporting AC input only, the totem-pole circuit of the embodiments of the present disclosure can be compatible with AC voltage and DC voltage, is suitable for different application scenes, makes DC power distribution more flexible, and simplifies the combination of products.

In some embodiments, in any of the positive polarity pass-through input mode, the negative polarity pass-through input mode, the positive polarity boost input mode, and the negative polarity boost input mode, the first node N1 and the second node N2 may output a fixed voltage having a predetermined value.

In some cases, the effect of droop control on the output voltage of the first node N1 and the second node N2 may be considered. In the case of considering the droop control, the output voltage of the first node N1 and the second node N2 may be determined based on the input voltage and a droop control strategy. For example, in some embodiments, the process 200 may further include: in response to the input voltage between the third node N3 and the fourth node N4 being less than the first threshold and greater than a second threshold, causing the first node N1 and the second node N2 to output a predetermined voltage; and in response to the input voltage between the third node N3 and the fourth node N4 being less than the second threshold, causing the first node N1 and the second node N2 to stop outputting a voltage. In this way, the stability and efficiency of the power converter 100 can be significantly improved.

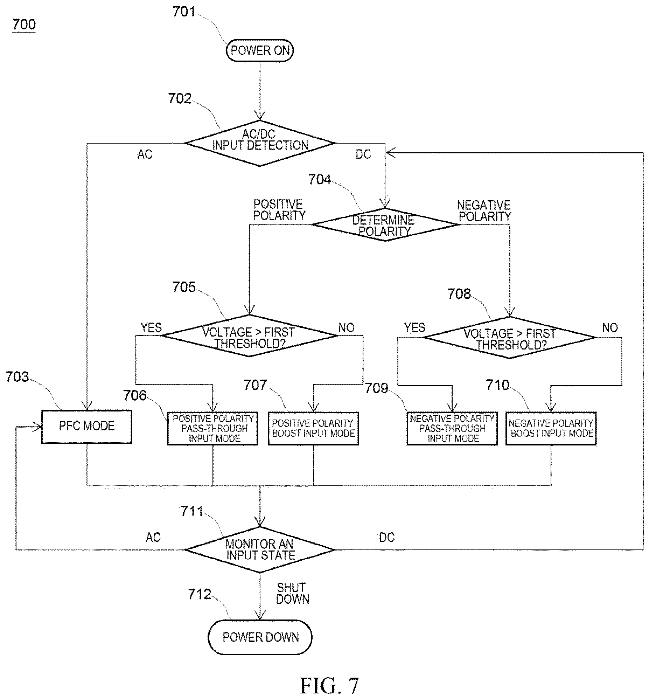

FIG. 7 shows a flowchart of a process 700 for controlling a totem-pole circuit 11 according to some other embodiments of the present disclosure. The process 700 illustrates another example control logic of the power converter 100 in the forward input configuration. The process 700 may be performed by the controller 10 of the power converter 100. The main difference between the process 700 and the process 200 is that the determination sequence of the power supply voltage magnitude and the connection polarity status is different, which will be described in detail below.

At block 701, the power converter 100 is powered on. After power-on, the controller 10 may obtain the input voltage between the third node N3 and the fourth node N4.

At block 702, AC/DC input detection is performed for the power converter 100 to determine, based on the input voltage between the third node N3 and the fourth node N, whether the third node N3 and the fourth node N4 are connected to the AC power supply or the DC power supply. In response to the third node N3 and the fourth node N4 being connected to the AC power supply, the process 700 proceeds to block 703, and in response to the third node N3 and the fourth node N4 being connected to the DC power supply, the process 700 proceeds to blocks 704 to 710.

At block 703, in response to the totem-pole circuit 11 being in the forward input configuration and the third node N3 and the fourth node N4 being connected to the AC power supply, the totem-pole circuit 11 is caused to operate in the PFC mode. The PFC mode of the totem-pole circuit 11 is its conventional working mode, and will not be repeated here.

At block 704 to block 710, in response to the totem-pole circuit 11 being in the forward input configuration and the third node N3 and the fourth node N4 connected to the DC power supply, the totem-pole circuit 11 is caused to operate in one of the positive polarity pass-through input mode, the negative polarity pass-through input mode, the positive polarity boost input mode, and the negative polarity boost input mode as described above. The specific operations of blocks 704 to 710 will be described in detail below.

At block 704, it may be determined whether the third node N3 and the fourth node N4 of the totem-pole circuit 11 are in a positive or negative polarity connection state. In response to the third node N3 and the fourth node N4 being in the positive polarity connection state, the process 700 proceeds to block 705. In response to the third node N3 and the fourth node N4 being in the negative polarity connection state, the process 700 proceeds to block 708.

At block 705, it may be determined whether the input voltage between the third node N3 and the fourth node N4 is greater than the first threshold. In response to the input voltage between the third node N3 and the fourth node N4 being greater than the first threshold, the process 700 proceeds to block 706. In response to the input voltage between the third node N3 and the fourth node N4 being less than the first threshold, the process 700 proceeds to block 707. In an embodiment of the present disclosure, in response to the input voltage between the third node N3 and the fourth node N4 being equal to the first threshold, the process 700 may proceed to block 706 or block 707 based on design requirement, which is not limited to the embodiments of the present disclosure.

At block 706, in response to the input voltage between the third node N3 and the fourth node N4 being greater than the first threshold, the totem-pole circuit 11 is caused to operate in the positive polarity pass-through input mode. The specific operation state of the totem-pole circuit 11 in the positive polarity pass-through input mode may refer to the content described above with reference to FIG. 3, and details are not described herein again.

At block 707, in response to the input voltage between the third node N3 and the fourth node N4 being less than the first threshold, the totem-pole circuit 11 is caused to operate in the positive polarity boost input mode. The specific operation state of the totem-pole circuit 11 in the positive polarity boost input mode may refer to the content described above with reference to FIG. 5, and details are not described herein again.

At block 708, it may be determined whether the input voltage between the third node N3 and the fourth node N4 is greater than the first threshold. In response to the input voltage between the third node N3 and the fourth node N4 being greater than the first threshold, the process 700 proceeds to block 709. In response to the input voltage between the third node N3 and the fourth node N4 being less than the first threshold, the process 700 proceeds to block 710. In an embodiment of the present disclosure, in response to the input voltage between the third node N3 and the fourth node N4 being equal to the first threshold, the process 700 may proceed to block 709 or block 710 based on design requirement, which is not limited to the embodiments of the present disclosure.

At block 709, in response to the input voltage between the third node N3 and the fourth node N4 being greater than the first threshold, the totem-pole circuit 11 is caused to operate in the negative polarity pass-through input mode. The specific operation state of the totem-pole circuit 11 in the negative polarity pass-through input mode may refer to the content described above with reference to FIG. 4, and details are not described herein again.

At block 710, in response to the input voltage between the third node N3 and the fourth node N4 being less than the first threshold, the totem-pole circuit 11 is caused to operate in the negative polarity boost input mode. The specific operation state of the totem-pole circuit 11 in the negative polarity boost input mode may refer to the content described above with reference to FIG. 6, and details are not described herein again.

At block 711, an input state of the power converter 100 may be monitored. In response to the power converter 100 being connected to the AC power supply, the process 700 returns to block 703. In response to the power converter 100 being connected to the DC power supply, the process 700 returns to block 704. In response to the power converter 100 being shut down, the power converter 100 is powered down at block 712.

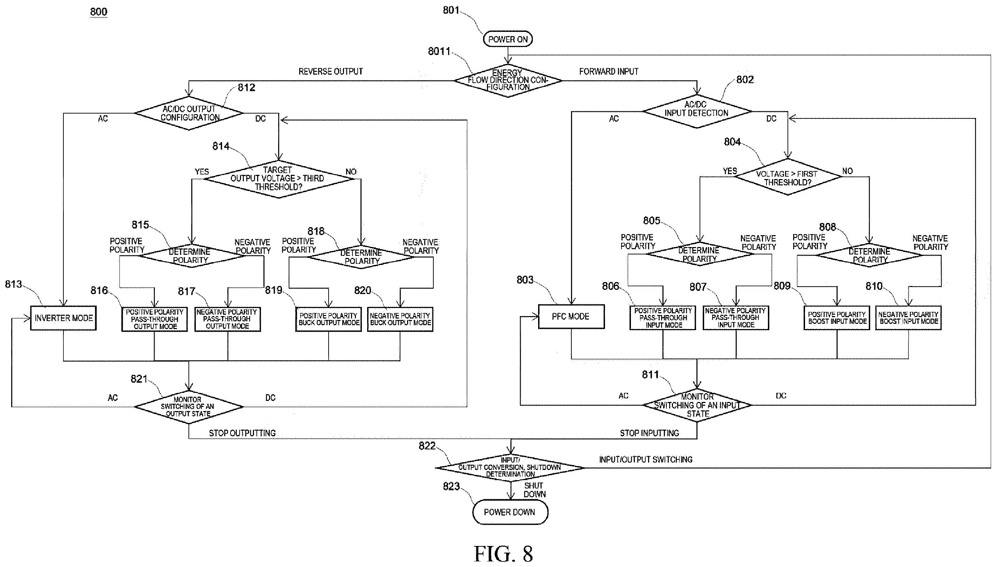

As described above, in some embodiments, the power converter 100 is adapted to operate in both forward and reverse output configurations. Example embodiments of the forward input configuration are described above with reference to FIGS. 2-7. The reverse output configuration of the power converter 100 will be described hereafter with reference to FIGS. 8-12.

FIG. 8 shows a flowchart of a process 800 for controlling a totem-pole circuit 11 according to some other embodiments of the present disclosure. The process 800 illustrates example control logic of the power converter 100 in a forward input configuration and a reverse output configuration, where the control logic in the forward input configuration is similar to the control logic described with reference to FIGS. 2-6. The process 800 may be performed by the controller 10 of the power converter 100.

At block 801, the power converter 100 is powered on.

At block 8011, the power converter 100 is configured for energy flow direction so that the power converter 100 operates in the forward input configuration or the reverse output configuration. With the power converter 100 operating in the forward input configuration, the process 800 proceeds to block 802. With the power converter 100 operating in the reverse output configuration, the process 800 proceeds to block 812. With reference to FIG. 1A, in the reverse output configuration, the first node N1 and the second node N2 may be used as the input end of the power converter 100, and the third node N3 and the fourth node N4 may be used as the output end of the power converter 100. In the reverse output configuration, the first node N1 and the second node N2 may deliver electrical energy stored by an energy storage system such as a battery to the totem-pole circuit 11 for power conversion, and the third node N3 and the fourth node N4 may provide the converted electrical energy to an AC/DC grid or an AC/DC load.

The operations of blocks 802 to 810 are similar to the operations of blocks 202 to 210 described above with reference to FIG. 2, and are not repeated herein.

At block 811, an input state of the power converter 100 may be monitored. In response to the power converter 100 being switched to input the AC, the process 800 returns to block 803. In response to the power converter 100 being switched to input the DC, the process 800 returns to block 804. In response to the power converter 100 ceasing input, the process 800 proceeds to block 822.

At block 812, whether the third node N3 and the fourth node N4 output an AC voltage or a DC voltage is configured. In a case that the third node N3 and the fourth node N4 are configured to output an AC voltage, the process 800 proceeds to block 813. In a case that the third node N3 and the fourth node N4 are configured to output a DC voltage, the process 800 proceeds to block 814.

At block 813, in response to the third node N3 and the fourth node N4 being configured to output an AC voltage, the totem-pole circuit 11 is caused to operate in an inverter mode. In the inverter mode, the totem-pole circuit 11 can convert DC energy into AC energy. The inverter mode of the totem-pole circuit 11 is its conventional working mode, which will not be described in detail here.

At block 814, it may be determined whether a target voltage of a DC load or DC grid is greater than a third threshold. The target voltage of the DC load may refer to a rated working voltage of the DC load. The target voltage of the DC grid may refer to a rated supply voltage of the DC grid in a normal power supply state. The third threshold may be predetermined based on design requirements, for example, may be equal to or unequal to the first threshold described above, which is not limited to the embodiments of the present disclosure. In response to the target voltage of the DC load or DC grid being greater than the third threshold, the process 800 proceeds to block 815. In response to the target voltage of the DC load or DC grid being less than the third threshold, the process 800 proceeds to block 818. In an embodiment of the present disclosure, in response to the target voltage of the DC load or DC grid being equal to the third threshold, the process 800 may proceed to block 815 or block 818 based on design requirement, which is not limited to the embodiments of the present disclosure.

At block 815, it may be determined whether the third node N3 and the fourth node N4 of the totem-pole circuit 11 are in a positive or negative polarity connection state. In the positive polarity connection state, the third node N3 is connected to the positive electrode of the DC load or DC grid, and the fourth node N4 is connected to the negative electrode of the DC load or DC grid. In the negative polarity connection state, the third node N3 is connected to the negative electrode of the DC load or DC grid, and the fourth node N4 is connected to the positive electrode of the DC load or DC grid. In response to the third node N3 and the fourth node N4 being in the positive polarity connection state, the process 800 proceeds to block 816. In response to the third node N3 and the fourth node N4 being in the negative polarity connection state, the process 800 proceeds to block 817.

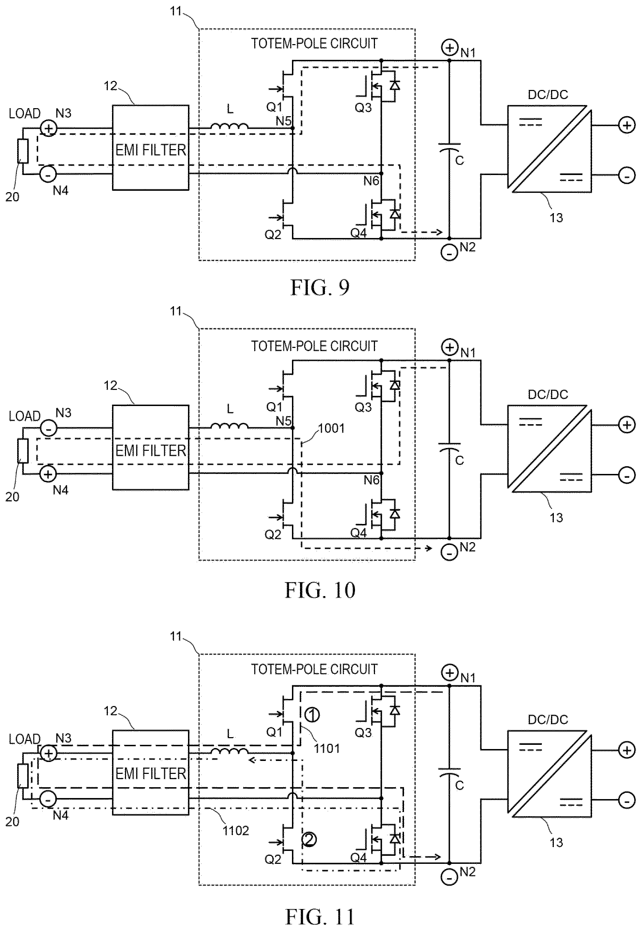

At block 816, in response to the third node N3 and the fourth node N4 being in the positive polarity connection state, the totem-pole circuit 11 is caused to operate in the positive polarity pass-through output mode. Referring to FIG. 1A, in the positive polarity pass-through output mode, the first switching device Q1 and the fourth switching device Q4 are switched on, and the second switching device Q2 and the third switching device Q3 are switched off. The specific operation state of the totem-pole circuit 11 in the positive polarity pass-through output mode will be described in detail below with reference to FIG. 9.

FIG. 9 shows a current path of the totem-pole circuit 11 shown in FIG. 1A in the positive polarity pass-through output mode. The reverse output configuration of the totem-pole circuit 11 is described herein by taking the third node N3 and the fourth node N4 connected to the DC load 20 as an example. In the reverse output configuration of the totem-pole circuit 11, the third node N3 and the fourth node N4 may supply power to the DC load 20. It should be understood that, in a case that the third node N3 and the fourth node N4 are connected to the DC grid, the third node N3 and the fourth node N4 may deliver electrical energy to the DC grid, which will not be repeated herein. As shown in FIG. 9, in the positive polarity pass-through output mode, since the third node N3 is connected to the positive electrode of the DC load 20, the fourth node N4 is connected to the negative electrode of the DC load 20, and the target voltage (for example, the rated voltage) of the DC load 20 is greater than the third threshold, the first switching device Q1 and the fourth switching device Q4 may be controlled to remain on, and the second switching device Q2 and the third switching device Q3 remain off. In this case, the current may flow from the first node N1 to the second node N2 via the first switching device Q1, the inductor L, the DC load 20, and the fourth switching device Q4. In a case that the power converter 100 includes the EMI filter 12, the current will also flow through the EMI filter 12. In this way, a desired DC output voltage may be provided between the third node N3 and the fourth node N4 to supply power to the DC load 20 or to deliver power to the DC grid.

At block 817, in response to the third node N3 and the fourth node N4 being in the negative polarity connection state, the totem-pole circuit 11 is caused to operate in the negative polarity pass-through output mode. In the negative polarity pass-through output mode, the first switching device Q1 and the fourth switching device Q4 are switched off, and the second switching device Q2 and the third switching device Q3 are switched on. The specific operation state of the totem-pole circuit 11 in the negative polarity pass-through output mode will be described in detail with reference to FIG. 10.

FIG. 10 shows a current path of the totem-pole circuit 11 shown in FIG. 1A in the negative polarity pass-through output mode. As shown in FIG. 10, in the negative polarity pass-through output mode, since the third node N3 is connected to the negative electrode of the DC load 20, the fourth node N4 is connected to the positive electrode of the DC load 20, and the target voltage of the DC load 20 is greater than the third threshold, the second switching device Q2 and the third switching device Q3 may be controlled to remain on, and the first switching device Q1 and the fourth switching device Q4 remain off. In this case, the current may flow from the first node N1 to the second node N2 via the third switching device Q3, the DC load 20, the inductor L, and the second switching device Q2. In a case that the power converter 100 includes the EMI filter 12, the current will also flow through the EMI filter 12. In this way, a desired DC output voltage may be provided between the third node N3 and the fourth node N4 to supply power to the DC load 20 or to deliver power to the DC grid.

At block 818, it may be determined whether the third node N3 and the fourth node N4 of the totem-pole circuit 11 are in a positive or negative polarity connection state. In response to the third node N3 and the fourth node N4 being in the positive polarity connection state, the process 800 proceeds to block 819. In response to the third node N3 and the fourth node N4 being in the negative polarity connection state, the process 800 proceeds to block 820.

At block 819, in response to the third node N3 and the fourth node N4 being in the positive polarity connection state, the totem-pole circuit 11 is caused to operate in the positive polarity buck output mode. In the positive polarity buck output mode, the fourth switching device Q4 remains on, the third switching device Q3 remains off, and the first switching device Q1 and the second switching device Q2 are alternately switched on. The specific operation state of the totem-pole circuit 11 in the positive polarity buck output mode will be described in detail with reference to FIG. 11.

FIG. 11 shows a current path of the totem-pole circuit 11 shown in FIG. 1A in the positive polarity buck output mode. As shown in FIG. 11, since the third node N3 is connected to the positive electrode of the DC load 20, the fourth node N4 is connected to the negative electrode of the DC load 20, and the target voltage of the DC load 20 is less than the third threshold, the fourth switching device Q4 may be controlled to remain on, the third switching device Q3 remains off, and the first switching device Q1 and the second switching device Q2 are alternately switched on. The first switching device Q1 and the second switching device Q2 may operate in a PWM mode or any other suitable mode. When the first switching device Q1 is switched on and the second switching device Q2 is switched off (which may also be referred to as a first stage), a current path 1101 may be formed in the power converter 110. Along the current path 1101, the current may flow from the first node N1 to the second node N2 via the first switching device Q1, the inductor L, the DC load 20, and the fourth switching device Q4, thereby causing the inductor L to store energy through excitation. When the first switching device Q1 is switched off and the second switching device Q2 is switched on (which may also be referred to as a second stage), a current path 1102 may be formed in the power converter 110. Along the current path 1102, the current may flow from the inductor L back to the inductor L via the DC load 20, the fourth switching device Q4, and the second switching device Q2, thereby implementing freewheeling. By alternately switching on and switching off the first switching device Q1 and the second switching device Q2, the voltage between the first node N1 and the second node N2 can be reduced to provide a required DC voltage between the third node N3 and the fourth node N4, thereby supplying power to the DC load 20 or delivering power to the DC grid.

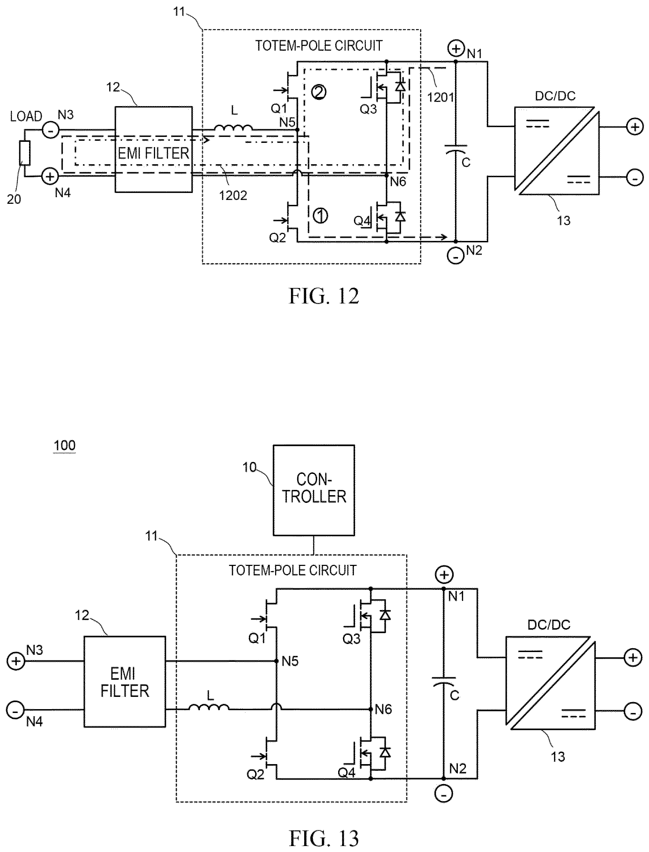

At block 820, in response to the third node N3 and the fourth node N4 being in the negative polarity connection state, the totem-pole circuit 11 is caused to operate in the negative polarity buck output mode. In the negative polarity buck output mode, the third switching device Q3 remains on, the fourth switching device Q4 remains off, and the first switching device Q1 and the second switching device Q2 are alternately switched on. The specific operation state of the totem-pole circuit 11 in the negative polarity buck output mode will be described in detail with reference to FIG. 12.

FIG. 12 shows a current path of the totem-pole circuit 11 shown in FIG. 1A in the negative polarity buck output mode. As shown in FIG. 12, since the third node N3 is connected to the negative electrode of the DC load 20, the fourth node N4 is connected to the positive electrode of the DC load 20, and the target voltage of the DC load 20 is less than the third threshold, the third switching device Q3 may be controlled to remain on, the fourth switching device Q4 remains off, and the first switching device Q1 and the second switching device Q2 are alternately switched on. The first switching device Q1 and the second switching device Q2 may operate in a PWM mode or any other suitable mode. When the second switching device Q2 is switched on and the first switching device Q1 is switched off (which may also be referred to as a first stage), a current path 1201 may be formed in the power converter 110. Along the current path 1201, the current may flow from the first node N1 to the second node N2 via the third switching device Q3, the DC load 20, the inductor L, and the second switching device Q2, thereby causing the inductor L to store energy through excitation. When the first switching device Q1 is switched on and the second switching device Q2 is switched off (which may also be referred to as a second stage), a current path 1202 may be formed in the power converter 110. Along the current path 1202, the current may flow from the inductor L back to the inductor L via the first switching device Q1, the third switching device Q3, and the DC load 20, thereby implementing freewheeling. By alternately switching on and switching off the first switching device Q1 and the second switching device Q2, the voltage between the first node N1 and the second node N2 can be reduced to provide a required DC voltage between the third node N3 and the fourth node N4, thereby supplying power to the DC load 20 or delivering power to the DC grid.

At block 821, an output state of the power converter 100 may be monitored. In response to the power converter 100 switching to output the AC, the process 800 returns to block 813. In response to the power converter 100 switching to output the DC, the process 800 returns to block 814. In response to the power converter 100 ceasing output, the process 800 proceeds to block 822.

At block 822, it is determined whether input/output conversion and shutdown occur in the power converter 100. In response to the occurrence of the input/output conversion, the process 800 returns to block 8011. In response to the occurrence of the shutdown, the power converter 100 is powered down at block 823.

In some embodiments, the process 800 may include selecting a working mode of the totem-pole circuit from a plurality of DC output modes in response to the totem-pole circuit being in the reverse output configuration, and the third node and the fourth node being connected to a DC load or a DC grid. The plurality of DC output modes may include at least two of the positive polarity pass-through output mode, the negative polarity pass-through output mode, the positive polarity buck output mode, and the negative polarity buck output mode as described above.

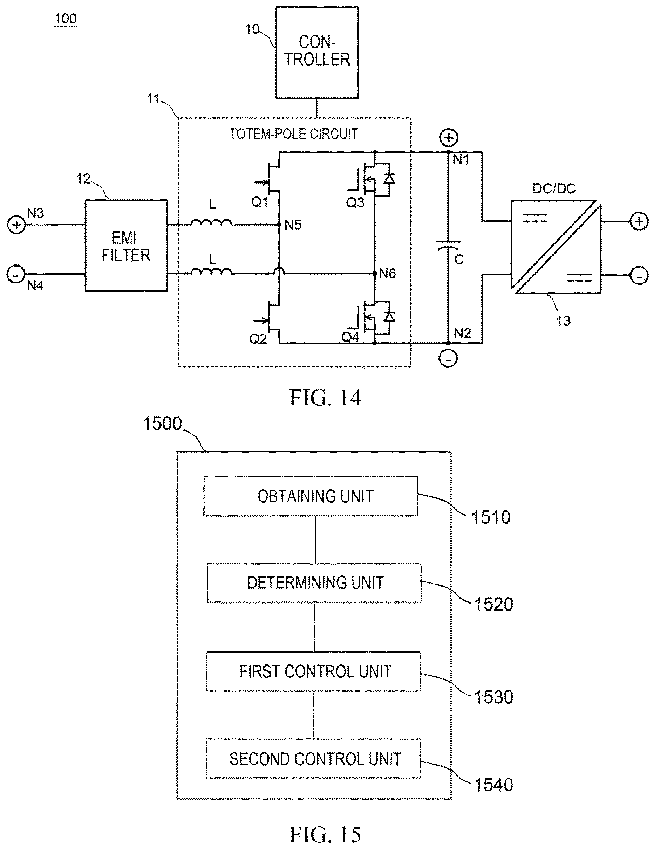

In the example environment shown in FIG. 1A, the inductor L is disposed between the fifth node N5 and the third node N3 for describing the principles of the present disclosure. It should be understood, however, that the inductor L may be disposed at other locations in the totem-pole circuit 11. For example, an inductor L may be electrically coupled between the sixth node N6 and the fourth node N4, as shown in FIG. 13, or inductors L may be electrically coupled between the fifth node N5 and the third node N3 and between the sixth node N6 and the fourth node N4, as shown in FIG. 14.

An embodiment of the present disclosure further provides a power converter 100, including:
a totem-pole circuit 11 including a first switching device Q1, a second switching device Q2, a third switching device Q3, a fourth switching device Q4, and an inductor L, a switching frequency of the first switching device Q1 and the second switching device Q2 being higher than a switching frequency of the third switching device Q3 and the fourth switching device Q4, the first switching device Q1 and the second switching device Q2 being connected in series between a first node N1 and a second node N2, a fifth node N5 between the first switching device Q1 and the second switching device Q2 being electrically coupled to a third node N3, the third switching device Q3 and the fourth switching device Q4 being connected in series between the first node N1 and the second node N2, a sixth node N6 between the third switching device Q3 and the fourth switching device Q4 being electrically coupled to a fourth node N4, wherein at least one of the fifth node N5 and the sixth node N6 is electrically coupled to a respective node of the third node N3 and the fourth node N4 via the inductor L; and
a processing unit configured to:
   in response to the totem-pole circuit 11 being in a forward input configuration and the third node N3 and the fourth node N4 being connected to an AC power supply, cause the totem-pole circuit 11 to operate in the power factor correction mode; and
   in response to the totem-pole circuit 11 being in the forward input configuration and the third node N3 and the fourth node N4 being connected to a DC power supply, cause the totem-pole circuit 11 to operate in one of a positive polarity pass-through input mode, a negative polarity pass-through input mode, a positive polarity boost input mode, and a negative polarity boost input mode.

In the positive polarity pass-through input mode, the first switching device Q1 and the fourth switching device Q4 are switched on, and the second switching device Q2 and the third switching device Q3 are switched off.

In the negative polarity pass-through input mode, the first switching device Q1 and the fourth switching device Q4 are switched off, and the second switching device Q2 and the third switching device Q3 are switched on.

In the positive polarity boost input mode, the fourth switching device Q4 remains on, the third switching device Q3 remains off, and the first switching device Q1 and the second switching device Q2 are alternately switched on.

In the negative polarity boost input mode, the third switching device Q3 remains on, the fourth switching device Q4 remains off, and the first switching device Q1 and the second switching device Q2 are alternately switched on.

In some embodiments, the processing unit is further configured to:
in response to the totem-pole circuit 11 being in the forward input configuration, the third node N3 being connected to the positive electrode of the DC power supply, the fourth node N4 being connected to the negative electrode of the DC power supply, and the input voltage between the third node N3 and the fourth node N4 being greater than the first threshold, cause the totem-pole circuit 11 is operate in the positive polarity pass-through input mode; and
in response to the totem-pole circuit 11 being in the forward input configuration, the third node N3 being connected to the negative electrode of the DC power supply, the fourth node N4 being connected to the positive electrode of the DC power supply, and the input voltage between the third node N3 and the fourth node N4 being greater than the first threshold, cause the totem-pole circuit 11 to operate in the negative polarity pass-through input mode.

In some embodiments, the processing unit is further configured to:
in response to the totem-pole circuit 11 being in the forward input configuration, the third node N3 being connected to the positive electrode of the DC power supply, the fourth node N4 being connected to the negative electrode of the DC power supply, and the input voltage between the third node N3 and the fourth node N4 being less than the first threshold, cause the totem-pole circuit 11 to operate in the positive polarity boost input mode; and
in response to the totem-pole circuit 11 being in the forward input configuration, the third node N3 being connected to the negative electrode of the DC power supply, the fourth node N4 being connected to the positive electrode of the DC power supply, and the input voltage between the third node N3 and the fourth node N4 being less than the first threshold, cause the totem-pole circuit 11 to operate in the negative polarity boost input mode.

In some embodiments, the processing unit is further configured to:
in response to the input voltage between the third node N3 and the fourth node N4 being less than the first threshold and greater than a second threshold, cause the first node N1 and the second node N2 to output a predetermined voltage; and
in response to the input voltage between the third node N3 and the fourth node N4 being less than the second threshold, cause the first node N1 and the second node N2 to stop outputting a voltage.

In some embodiments, the processing unit is further configured to:
in response to the totem-pole circuit 11 being in the reverse output configuration, and the third node N3 and the fourth node N4 being connected to the AC load or the AC grid, cause the totem-pole circuit 11 to operate in an inverter mode; and
in response to the totem-pole circuit 11 being in the reverse output configuration, and the third node N3 and the fourth node N4 being connected to a DC load or a DC grid, cause the totem-pole circuit 11 to operate in one of a positive polarity pass-through output mode, a negative polarity pass-through output mode, a positive polarity buck output mode, and a negative polarity buck output mode.

In the positive polarity pass-through output mode, the first switching device Q1 and the fourth switching device Q4 are switched on, and the second switching device Q2 and the third switching device Q3 are switched off.

In the negative polarity pass-through output mode, the first switching device Q1 and the fourth switching device Q4 are switched off, and the second switching device Q2 and the third switching device Q3 are switched on.

In the positive polarity buck output mode, the fourth switching device Q4 remains on, the third switching device Q3 remains off, and the first switching device Q1 and the second switching device Q2 are alternately switched on.

In the negative polarity buck output mode, the third switching device Q3 remains on, the fourth switching device Q4 remains off, and the first switching device Q1 and the second switching device Q2 are alternately switched on.

In some embodiments, the processing unit is further configured to:
in response to the totem-pole circuit 11 being in the reverse output configuration, the third node N3 being connected to the positive electrode of the DC load or DC grid, the fourth node N4 being connected to the negative electrode of the DC load or DC grid and the target voltage of the DC load or DC grid being greater than the third threshold, cause the totem-pole circuit 11 to operate in the positive polarity pass-through output mode; and
in response to the totem-pole circuit 11 being in the reverse output configuration, the third node N3 being connected to the negative electrode of the DC load or DC grid, the fourth node N4 being connected to the positive electrode of the DC load or DC grid and the target voltage of the DC load or DC grid being greater than the third threshold, cause the totem-pole circuit 11 to operate in the negative polarity pass-through output mode.

In some embodiments, the processing unit is further configured to:
in response to the totem-pole circuit 11 being in the reverse output configuration, the third node N3 being connected to the positive electrode of the DC load or DC grid, the fourth node N4 being connected to the negative electrode of the DC load or DC grid and the target voltage of the DC load or DC grid being less than the third threshold, cause the totem-pole circuit 11 to operate in the positive polarity buck output mode; and
in response to the totem-pole circuit 11 being in the reverse output configuration, the third node N3 being connected to the negative electrode of the DC load or DC grid, the fourth node N4 being connected to the positive electrode of the DC load or DC grid and the target voltage of the DC load or DC grid being less than the third threshold, cause the totem-pole circuit 11 to operate in the negative polarity buck output mode.

According to embodiments of the present disclosure, in a case that the power converter 100 is in the forward input configuration, the totem-pole circuit 11 can be compatible with the AC power supply and the DC power supply, and in a case that the power converter 100 is in the reverse output configuration, the totem-pole circuit 11 can be compatible with the AC/DC grid or the AC/DC load. Thus, the power converter 100 can be adapted to different application scenarios, making DC power distribution more flexible and simplifying the combination of products.

In some embodiments, the power converter 100 can be applied to an on-board charger (OBC) of an electric vehicle, so that the electric vehicle can not only accept an AC charging port of the low-power AC input/output for charging, but also can directly use the DC power supply to charge the electric vehicle in the all-DC home power distribution environment, thus there is no need to purchase additional DC charging piles, thereby saving expenses.

It should be understood that the power converter 100 may be applied to any other suitable environment, which is not limited to the embodiments of the present disclosure.

Embodiments of the present disclosure further provide an apparatus 1500 for controlling totem-pole circuit, as shown in FIG. 15. The apparatus 1500 includes: an obtaining unit 1510 configured to, in response to the totem-pole circuit being in a forward input configuration, obtain an input voltage between the third node and the fourth node; a determining unit 1520 configured to determine, based on the input voltage, whether the third node and the fourth node are connected to an AC power supply or a DC power supply; a first control unit 1530 configured to, in response to the third node and the fourth node being connected to the AC power supply, cause the totem-pole circuit to operate in a power factor correction mode; and a second control unit 1540 configured to, in response to the third node and the fourth node being connected to the DC power supply, select a working mode of the totem-pole circuit from a plurality of DC input modes.

In some embodiments, the plurality of DC input modes includes at least two of a positive polarity pass-through input mode, a negative polarity pass-through input mode, a positive polarity boost input mode, and a negative polarity boost input mode, wherein in the positive polarity pass-through input mode, the first switching device and the fourth switching device are switched on, and the second switching device and the third switching device are switched off, wherein in the negative polarity pass-through input mode, the first switching device and the fourth switching device are switched off, and the second switching device and the third switching device are switched on, wherein in the positive polarity boost input mode, the fourth switching device remains on, the third switching device remains off, and the first switching device and the second switching device are alternately switched on, and wherein in the negative polarity boost input mode, the third switching device remains on, the fourth switching device remains off, and the first switching device and the second switching device are alternately switched on.

In some embodiments, the second control unit 1510 is further configured to: in response to the totem-pole circuit being in the forward input configuration, the third node being connected to the positive electrode of the DC power supply, the fourth node being connected to the negative electrode of the DC power supply, and the input voltage between the third node and the fourth node being greater than the first threshold, cause the totem-pole circuit to operate in the positive polarity pass-through input mode; and in response to the totem-pole circuit being in the forward input configuration, the third node being connected to the negative electrode of the DC power supply, the fourth node being connected to the positive electrode of the DC power supply, and the input voltage between the third node and the fourth node being greater than the first threshold, cause the totem-pole circuit to operate in the negative polarity pass-through input mode.

In some embodiments, the second control unit 1510 is further configured to: in response to the totem-pole circuit being in the forward input configuration, the third node being connected to the positive electrode of the DC power supply, the fourth node being connected to the negative electrode of the DC power supply, and the input voltage between the third node and the fourth node being less than the first threshold, cause the totem-pole circuit to operate in the positive polarity boost input mode; and in response to the totem-pole circuit being in the forward input configuration, the third node being connected to the negative electrode of the DC power supply, the fourth node being connected to the positive electrode of the DC power supply, and the input voltage between the third node and the fourth node being less than the first threshold, cause the totem-pole circuit to operate in the negative polarity boost input mode.

In some embodiments, the second control unit 1510 is further configured to: in response to the input voltage between the third node and the fourth node being less than the first threshold and greater than the second threshold, cause the first node and the second node to output a predetermined voltage; and in response to the input voltage between the third node and the fourth node being less than the second threshold, cause the first node and the second node to stop outputting a voltage.

In some embodiments, the apparatus 1500 further includes: a third control unit configured to, in response to the totem-pole circuit being in the reverse output configuration, the third node and the fourth node being connected to the AC load or the AC grid, cause the totem-pole circuit to operate in the inverter mode; and a fourth control unit configured to, in response to the totem-pole circuit being in the reverse output configuration, the third node and the fourth node being connected to the DC load or the DC grid, select a working mode of the totem-pole circuit from a plurality of DC output modes.

In some embodiments, the plurality of DC output modes include at least two of a positive polarity pass-through output mode, a negative polarity pass-through output mode, a positive polarity buck output mode, and a negative polarity buck output mode, wherein in the positive polarity pass-through output mode, the first switching device and the fourth switching device are switched on, and the second switching device and the third switching device are switched off, wherein in the negative polarity pass-through output mode, the first switching device and the fourth switching device are switched off, and the second switching device and the third switching device are switched on, wherein in the positive polarity buck output mode, the fourth switching device remains on, the third switching device remains off, and the first switching device and the second switching device are alternately switched on, and wherein in the negative polarity buck output mode, the third switching device remains on, the fourth switching device remains off, and the first switching device and the second switching device are alternately switched on.

In some embodiments, the fourth control unit is further configured to: in response to the totem-pole circuit being in the reverse output configuration, the third node being connected to a positive electrode of the DC load or DC grid, the fourth node being connected to a negative electrode of the DC load or DC grid and a target voltage of the DC load or DC grid being greater than a third threshold, cause the totem-pole circuit to operate in the positive polarity pass-through output mode; and in response to the totem-pole circuit being in the reverse output configuration, the third node being connected to the negative electrode of the DC load or DC grid, the fourth node being connected to the positive electrode of the DC load or DC grid and the target voltage of the DC load or DC grid being greater than the third threshold, cause the totem-pole circuit to operate in the negative polarity pass-through output mode.

In some embodiments, the fourth control unit is further configured to: in response to the totem-pole circuit being in the reverse output configuration, the third node being connected to the positive electrode of the DC load or DC grid, the fourth node being connected to the negative electrode of the DC load or DC grid and a target voltage of the DC load or DC grid being less than the third threshold, cause the totem-pole circuit to operate in the positive polarity buck output mode; and in response to the totem-pole circuit being in the reverse output configuration, the third node being connected to the negative electrode of the DC load or DC grid, the fourth node being connected to the positive electrode of the DC load or DC grid and the target voltage of the DC load or DC grid being less than the third threshold, cause the totem-pole circuit to operate in the negative polarity buck output mode.

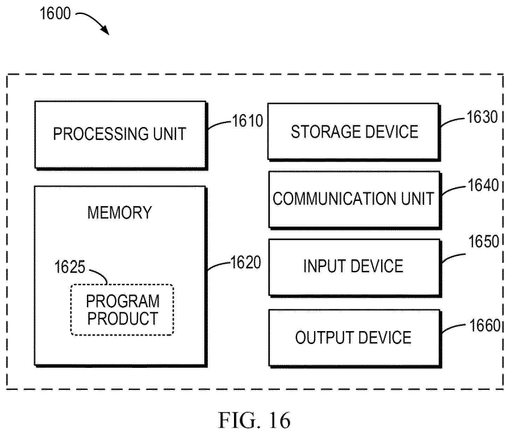

FIG. 16 shows a block diagram illustrating an electronic device 1600 in which one or more embodiments of the present disclosure may be implemented. It should be understood that the electronic device 1600 illustrated in FIG. 16 is merely an example and should not constitute any limitation on the functionality and scope of the embodiments described herein. The electronic device 1600 shown in FIG. 16 may be configured to implement the processes described with reference to FIG. 1A to FIG. 14.

As shown in FIG. 16, the electronic device 1600 is in the form of a general-purpose computing device. Components of the electronic device 1600 may include, but are not limited to, one or more processors or processing units 1610, a memory 1620, a storage device 1630, one or more communication units 1640, one or more input devices 1650, and one or more output devices 1660. The processing unit 1610 may be an actual or virtual processor and adapted to perform various processes according to programs stored in the memory 1620. In a multiprocessor system, a plurality of processing units executes computer-executable instructions in parallel to improve parallel processing capabilities of electronic device 1600. The processing unit 1610 may be used to perform the described processes 1000, 200, 700, and 800.

The electronic device 1600 typically includes a plurality of computer storage media. Such media may be any available media accessible to the electronic device 1600, including, but not limited to, volatile and nonvolatile media, removable and non-removable media. The memory 1620 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 1630 may be a removable or non-removable medium and may include a machine-readable medium, such as a flash drive, magnetic disk, or any other medium, which may be adapted to store information and/or data (e.g., training data for training) and may be accessed within electronic device 1600.

The electronic device 1600 may further include additional removable/non-removable, volatile/non-volatile storage media. Although not shown in FIG. 16, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 1620 may include a computer program product 1625 having one or more program modules configured to perform various methods or actions of various embodiments of the present disclosure.

The communication unit 1640 implements communication with other computing devices over a communication medium. Additionally, the functionality of components of the electronic device 1600 may be implemented in a single computing cluster or a plurality of computing machines adapted to communicate over a communication connection. Thus, the electronic device 1600 may operate in a networked environment using logical connections with one or more other servers, network personal computers (PCs), or another network node.

The input device 1650 may be one or more input devices, such as a mouse, a keyboard, a trackball, or the like. The output device 1660 may be one or more output devices, such as a display, a speaker, a printer, or the like. The electronic device 1600 may also communicate with one or more external devices (not shown) through the communication unit 1640 as needed, external devices such as storage devices, display devices, etc., communicate with one or more devices that enable a user to interact with the electronic device 1600, or communicate with any device (e.g., network card, modem, etc.) that enables the electronic device 1600 to communicate with one or more other computing devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions include an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for controlling a totem-pole circuit, the totem-pole circuit comprising a first switching device, a second switching device, a third switching device, a fourth switching device, and an inductor, a switching frequency of the first switching device and the second switching device being higher than a switching frequency of the third switching device and the fourth switching device, the first switching device and the second switching device being connected in series between a first node and a second node, a fifth node between the first switching device and the second switching device being electrically coupled to a third node, the third switching device and the fourth switching device being connected in series between the first node and the second node, a sixth node between the third switching device and the fourth switching device being electrically coupled to a fourth node, wherein at least one of the fifth node and the sixth node is electrically coupled to a respective node of the third node and the fourth node via the inductor, the method comprising:
in response to the totem-pole circuit being in a forward input configuration, obtaining (1010) an input voltage between the third node and the fourth node;
determining (1020), based on the input voltage, whether the third node and the fourth node are connected to an AC power supply or a DC power supply;
in response to the third node and the fourth node being connected to the AC power supply, causing (1030) the totem-pole circuit to operate in a power factor correction mode; and
in response to the third node and the fourth node being connected to the DC power supply, selecting (1040) a working mode of the totem-pole circuit from a plurality of DC input modes.

2. The method of claim 1, wherein the plurality of DC input modes comprises at least two of a positive polarity pass-through input mode, a negative polarity pass-through input mode, a positive polarity boost input mode, and a negative polarity boost input mode,
wherein in the positive polarity pass-through input mode, the first switching device and the fourth switching device are switched on, and the second switching device and the third switching device are switched off,
wherein in the negative polarity pass-through input mode, the first switching device and the fourth switching device are switched off, and the second switching device and the third switching device are switched on,
wherein in the positive polarity boost input mode, the fourth switching device remains on, the third switching device remains off, and the first switching device and the second switching device are alternately switched on, and
wherein in the negative polarity boost input mode, the third switching device remains on, the fourth switching device remains off, and the first switching device and the second switching device are alternately switched on.

3. The method of claim 2, further comprising:
in response to the totem-pole circuit being in the forward input configuration, the third node being connected to a positive electrode of the DC power supply, the fourth node being connected to a negative electrode of the DC power supply and the input voltage being greater than a first threshold, causing (206, 706, 806) the totem-pole circuit to operate in the positive polarity pass-through input mode; and
in response to the totem-pole circuit being in the forward input configuration, the third node being connected to the negative electrode of the DC power supply, the fourth node being connected to the positive electrode of the DC power supply and the input voltage being greater than the first threshold, causing (207, 709, 807) the totem-pole circuit to operate in the negative polarity pass-through input mode.

4. The method of claim 3, further comprising:
in response to the totem-pole circuit being in the forward input configuration, the third node being connected to the positive electrode of the DC power supply, the fourth node being connected to the negative electrode of the DC power supply and the input voltage being less than the first threshold, causing (209, 707, 809) the totem-pole circuit to operate in the positive polarity boost input mode; and
in response to the totem-pole circuit being in the forward input configuration, the third node being connected to the negative electrode of the DC power supply, the fourth node being connected to the positive electrode of the DC power supply and the input voltage being less than the first threshold, causing (210, 710, 810) the totem-pole circuit to operate in the negative polarity boost input mode.

5. The method of claim 4, further comprising:
in response to the input voltage being less than the first threshold and greater than a second threshold, causing the first node and the second node to output a predetermined voltage; and
in response to the input voltage being less than the second threshold, causing the first node and the second node to stop outputting a voltage.

6. The method of any of claims 1-5, further comprising:
in response to the totem-pole circuit being in a reverse output configuration, and the third node and the fourth node being connected to an AC load or an AC grid, causing (813) the totem-pole circuit to operate in an inverter mode; and
in response to the totem-pole circuit being in the reverse output configuration, and the third node and the fourth node being connected to a DC load or a DC grid, selecting a working mode of the totem-pole circuit from a plurality of DC output modes.

7. The method of claim 6, wherein the plurality of DC output modes comprises at least two of a positive polarity pass-through output mode, a negative polarity pass-through output mode, a positive polarity buck output mode, and a negative polarity buck output mode,
wherein in the positive polarity pass-through output mode, the first switching device and the fourth switching device are switched on, and the second switching device and the third switching device are switched off,
wherein in the negative polarity pass-through output mode, the first switching device and the fourth switching device are switched off, and the second switching device and the third switching device are switched on,
wherein in the positive polarity buck output mode, the fourth switching device remains on, the third switching device remains off, and the first switching device and the second switching device are alternately switched on, and
wherein in the negative polarity buck output mode, the third switching device remains on, the fourth switching device remains off, and the first switching device and the second switching device are alternately switched on.

8. The method of claim 7, further comprising:
in response to the totem-pole circuit being in the reverse output configuration, the third node being connected to a positive electrode of the DC load or DC grid, the fourth node being connected to a negative electrode of the DC load or DC grid and a target voltage of the DC load or DC grid being greater than a third threshold, causing (816) the totem-pole circuit to operate in the positive polarity pass-through output mode; and
in response to the totem-pole circuit being in the reverse output configuration, the third node being connected to the negative electrode of the DC load or DC grid, the fourth node being connected to the positive electrode of the DC load or DC grid and the target voltage of the DC load or DC grid being greater than the third threshold, causing (817) the totem-pole circuit to operate in the negative polarity pass-through output mode.

9. The method of claim 8, further comprising:
in response to the totem-pole circuit being in the reverse output configuration, the third node being connected to the positive electrode of the DC load or DC grid, the fourth node being connected to the negative electrode of the DC load or DC grid and a target voltage of the DC load or DC grid being less than the third threshold, causing (819) the totem-pole circuit to operate in the positive polarity buck output mode; and
in response to the totem-pole circuit being in the reverse output configuration, the third node being connected to the negative electrode of the DC load or DC grid, the fourth node being connected to the positive electrode of the DC load or DC grid and the target voltage of the DC load or DC grid being less than the third threshold, causing (820) the totem-pole circuit to operate in the negative polarity buck output mode.

10. An apparatus (1500) for controlling a totem-pole circuit, the totem-pole circuit comprising a first switching device, a second switching device, a third switching device, a fourth switching device, and an inductor, a switching frequency of the first switching device and the second switching device being higher than a switching frequency of the third switching device and the fourth switching device, the first switching device and the second switching device being connected in series between a first node and a second node, a fifth node between the first switching device and the second switching device being electrically coupled to a third node, the third switching device and the fourth switching device being connected in series between the first node and the second node, a sixth node between the third switching device and the fourth switching device being electrically coupled to a fourth node, wherein at least one of the fifth node and the sixth node is electrically coupled to a respective node of the third node and the fourth node via the inductor, the apparatus (1500) comprising:
an obtaining unit (1510) configured to, in response to the totem-pole circuit being in a forward input configuration, obtain an input voltage between the third node and the fourth node;
a determining unit (1520) configured to determine, based on the input voltage, whether the third node and the fourth node are connected to an AC power supply or a DC power supply;
a first control unit (1530) configured to, in response to the third node and the fourth node being connected to the AC power supply, cause the totem-pole circuit to operate in a power factor correction mode; and
a second control unit (1540) configured to, in response to the third node and the fourth node being connected to the DC power supply, select a working mode of the totem-pole circuit from a plurality of DC input modes.

11. A power converter (100) comprising:
a totem-pole circuit (11), comprising a first switching device, a second switching device, a third switching device, a fourth switching device, and an inductor, a switching frequency of the first switching device and the second switching device being higher than a switching frequency of the third switching device and the fourth switching device, the first switching device and the second switching device being connected in series between a first node and a second node, a fifth node between the first switching device and the second switching device being electrically coupled to a third node, the third switching device and the fourth switching device being connected in series between the first node and the second node, a sixth node between the third switching device and the fourth switching device being electrically coupled to a fourth node, wherein at least one of the fifth node and the sixth node is electrically coupled to a respective node of the third node and the fourth node via the inductor; and
a processing unit configured to:
in response to the totem-pole circuit being in a forward input configuration, obtain an input voltage between the third node and the fourth node;
determine, based on the input voltage, whether the third node and the fourth node are connected to an AC power supply or a DC power supply;
in response to the third node and the fourth node being connected to the AC power supply, cause the totem-pole circuit to operate in a power factor correction mode; and
in response to the third node and the fourth node being connected to the DC power supply, select a working mode of the totem-pole circuit from a plurality of DC input modes.

12. The power converter (100) of claim 11, wherein the plurality of DC input modes comprises at least two of a positive polarity pass-through input mode, a negative polarity pass-through input mode, a positive polarity boost input mode, and a negative polarity boost input mode,
wherein in the positive polarity pass-through input mode, the first switching device and the fourth switching device are switched on, and the second switching device and the third switching device are switched off,
wherein in the negative polarity pass-through input mode, the first switching device and the fourth switching device are switched off, and the second switching device and the third switching device are switched on,
wherein in the positive polarity boost input mode, the fourth switching device remains on, the third switching device remains off, and the first switching device and the second switching device are alternately switched on, and
wherein in the negative polarity boost input mode, the third switching device remains on, the fourth switching device remains off, and the first switching device and the second switching device are alternately switched on.

13. The power converter (100) of claim 12, wherein the processing unit is further configured to:
in response to the totem-pole circuit being in the forward input configuration, the third node being connected to a positive electrode of the DC power supply, the fourth node being connected to a negative electrode of the DC power supply and the input voltage being greater than a first threshold, cause the totem-pole circuit to operate in the positive polarity pass-through input mode;
in response to the totem-pole circuit being in the forward input configuration, the third node being connected to the negative electrode of the DC power supply, the fourth node being connected to the positive electrode of the DC power supply and the input voltage being greater than the first threshold, cause the totem-pole circuit to operate in the negative polarity pass-through input mode;
in response to the totem-pole circuit being in the forward input configuration, the third node being connected to the positive electrode of the DC power supply, the fourth node being connected to the negative electrode of the DC power supply and the input voltage being less than the first threshold, cause the totem-pole circuit to operate in the positive polarity boost input mode; and
in response to the totem-pole circuit being in the forward input configuration, the third node being connected to the negative electrode of the DC power supply, the fourth node being connected to the positive electrode of the DC power supply and the input voltage being less than the first threshold, cause the totem-pole circuit to operate in the negative polarity boost input mode.

14. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 9.

15. A computer-readable storage medium having a computer program stored thereon, which when executed by a processor, implements the method of any of claims 1 to 9.
